**Europäisches Patentamt**

**European Patent Office**

**Office européen des brevets**

(11) Veröffentlichungsnummer: **0 027 606**

**A1**

(12) # EUROPÄISCHE PATENTANMELDUNG

(21) Anmeldenummer: **80106154.0**

(22) Anmeldetag: **10.10.80**

(51) Int. Cl.³: **C 09 J 3/14**
**C 08 L 53/02**

(30) Priorität: **18.10.79 DE 2942127**

(43) Veröffentlichungstag der Anmeldung:
**29.04.81 Patentblatt 81/17**

(84) Benannte Vertragsstaaten:
**AT BE CH DE FR GB IT LI LU NL SE**

(71) Anmelder: **BASF Aktiengesellschaft**
**Carl-Bosch-Strasse 38**
**D-6700 Ludwigshafen(DE)**

(72) Erfinder: **Groh, Wolfgang, Dr.**
**Mannheimer Strasse 94**
**D-6800 Mannheim 31(DE)**

(72) Erfinder: **Heinz, Gerhard, Dr.**
**Im Vogelsang 2**
**D-6719 Weisenheim(DE)**

(72) Erfinder: **Druschke, Wolfgang Dr.**
**Berliner Strasse 28**
**D-6711 Dirmstein(DE)**

(72) Erfinder: **Schmitt, Burghard, Dr.**
**Hermannstrasse 3**
**D-6520 Worms(DE)**

(54) **Schmelzhaftkleber auf Basis von nichthydrierten, linearen Blockcopolymerisaten A-B-C.**

(57) Die Erfindung betrifft einen Schmelzhaftkleber, der aus einem nichthydrierten, linearen Blockcopolymerisat A-B-C, einem üblich klebrig machenden Harz und aus einem üblichen Kautschukstrecköl aufgebaut ist.

Dans lineare Blockcopolymerisat weist einen endständigen, nichtelastomeren Polymerblock auf, der 5 bis 25 Gew.%, bezogen auf A-B-C, ausmacht und aufgebaut ist aus monovinylaromatischen Monomeren; es enthält ferner ein elastomeres (Co)polymerisat B als Mittelstück in einem Anteil von 50 bis 85 Gew.%, bezogen auf A-B-C; dieses ist entweder aus Isopren allein, was bevorzugt ist, oder aus einer Mischung von Isopren und Butadien aufgebaut, wobei in letzterem Falle Butadiengehalte von 5 bis 70 Gew.% angewendet werden. Das Polymerisat C macht einen Anteil von 5 bis 40 Gew.%, bezogen auf A-B-C, aus und besteht entweder aus einem Homopolymerisat von Isopren, wobei mehr als 50 Gew.% 3,4 verknüpfte Bausteine vorliegen sollen, oder es besteht aus einem Copolymerisat aus Styrol und Butadien oder Styrol und Isopren in bestimmten Verhältnissen, wobei im Falle der Copolymerisate die Monomeren in statistischer Verteilung vorliegen müssen.

## Schmelzhaftkleber auf Basis von nichthydrierten, linearen Blockcopolymerisaten A-B-C

Die Erfindung betrifft Schmelzhaftkleber auf der Basis von nichthydrierten, linearen Blockcopolymerisaten A-B-C mit einem endständigen Polystyrolblock A einem mittelständigen Teil B, der i.w. aus Isopren oder einem Mischpolymerisat aus Butadien und Isopren aufgebaut ist, in dem die Monomeren regellos verteilt sind, und einem Teil C der 3,4 Isopren oder ein Mischpolymerisat aus Styrol und Butadien oder Isopren im Verhältnis Styrol/Dien 40/60 bis 60/40.

Bekanntlich können kautschukartige Blockcopolymerisate aus einer monovinylaromatischen Verbindung (Styrol) und einem konjugierten Dien (Butadien oder Isopren) zur Herstellung von Haftkleber-Mischungen verwendet werden. Diese Haftkleber-Mischung enthalten neben dem Blockcopolymerisat im allgemeinen noch ein oder mehrere klebrigmachende Harze, beispielsweise Kolophoniumderivate, Cumaron-Inden-Harze und dgl. und ein Kautschukstrecköl, sowie ggf. Antioxidantien und andere Füllstoffe (vgl. 1 und 2).

Zum Stand der Technik verweisen wir auf
(1) DE-AS 15 94 254
(2) DE-AS 20 11 036.

Vo/BL

Aus (1) und (2) ist es bekannt, in Haftkleber-Mischungen nichthydrierte, lineare kautschukartige Dreiblockcopolymerisate A-B-A aus einer monovinylaromatischen Verbindung und mindestens einem konjugierten Dien zu verwenden. Wenn dabei nach den Angaben in der Beschreibung in (2) auch der Einsatz von Mischpolymerisaten als Komponente B prinzipiell möglich ist, werden hierin jedoch, ebenso wie in (1), nur lineare Blockcopolymerisate mit einem elastomeren Mittelblock B aus Butadien oder Isopren und 2 endständigen gleichen oder ungleichen Polystyrolblöcken A beschrieben und für die Herstellung von Haftkleber-Mischungen verwendet. Solche Haftkleber-Mischungen zeigen eine zufriedenstellende Schälfestigkeit und Scherfestigkeit. Die Wärmestandfestigkeit der daraus hergestellten Verbunde läßt jedoch zu wünschen übrig.

Es bestand daher die Aufgabe, die vorstehend beschriebenen Nachteile zu beheben. Die Erfindung betrifft einen Schmelzhaftkleber, enthaltend im wesentlichen eine Mischung aus

A) 100 Gew.-Teilen mindestens eines nicht hydrierten, linearen Blockcopolymerisats der Formel A-B-C, das aufgebaut ist aus:

    a1) einem endständigen, nicht-elastomeren Polymerblock A, aus monovinylaromatischen Monomeren, der ein mittleres Molekulargewicht (Viskositätsmittel) von 5000 bis 50 000 aufweist und in einem Anteil von 5 bis 25 Gew.%, bezogen auf A-B-C vorliegt,

    a2) einem Elastomeren (Co-)polymerisat B aus Isopren oder Butadien und Isopren

    a3) einem Polymerisat C;

B) 25 bis 300 Gew.-Teilen eines klebrigmachenden Harzes

C) 5 bis 200 Gew.-Teilen eines Kautschukstrecköles und ggf.

D) üblichen Zusatzstoffen in wirksamen Mengen, dadurch gekennzeichnet, daß das elastomere (Co-)polymerisat a2) in einem Anteil von 50 bis 85 Gew.%, bezogen auf A-B-C, vorliegt und einen Butadienanteil von bis zu 70 Gew.% aufweist, ferner gekennzeichnet dadurch, daß das Polymerisat a3) in einem Anteil von 5 bis 40 Gew.%, bezogen auf A-B-C, vorliegt und entweder nur aus Isopren mit mehr als 50 % 3,4--verknüpften Bausteinen besteht oder ein Copolymerisat darstellt, das Styrol und Butadien oder Styrol und Isopren im Verhältnis Styrol/konjugiertes Dien von 40/60 bis 60 : 40 aufweist und die Monomeren in statistischer Verteilung enthält.

Die erfindungsgemäß einzusetzende Komponente A, d.h. die linearen kautschukartigen Blockcopolymerisate A-B-C bilden den wesentlichen elastomeren Bestandteil des Schmelzhaftklebers. Monovinyl- und monovinylidenaromatische Verbindungen, die für den Aufbau des endständigen, nicht elastomeren Polymerblockes A in Betracht kommen sind beispielsweise Styrol, die seitenkettenalkylierten Styrole, wie $\alpha$-Methylstyrol und die kernsubstituierten Styrole wie Vinyltoluol, Äthylvinylbenzol und andere. Die monovinyl- und monovinylidenaromatischen Verbindungen können auch in Mischungen miteinander eingesetzt werden. Vorzugsweise wird jedoch Styrol alleine verwendet. Das Blockpolymerisat A-B-C enthält dabei im allgemeinen 5 bis 25 Gew.%, insbesondere 10 bis 20 Gew.% der monovinyl- bzw. monovinylidenaromatischen Verbindungen; d.h. des endständigen Blockes A.

Bei dem mittelständigen Teil B des Blockcopolymerisates handelt es sich um Homopolymerisat aus Isopren oder um ein Mischpolymerisat, das aus Butadien- und Isopreneinheiten aufgebaut ist und in dem das Gew.-Verhältnis Butadien zu Isopren in weiten Grenzen schwanken kann, z.B. im Bereich von 70 : 30 bis 5 : 95. Die genannten Monomeren können in diesem Mischpolymerisat in statistischer Verteilung oder geordnet vorliegen, je nachdem, welche Präparationsmethode gewählt wird. Werden bei der später noch zu besprechenden Herstellung die Monomeren von Anfang an als Gemisch vorgelegt, und wird in Abwesenheit eines polaren Lösungsmittels bei der anionischen Polymerisation gearbeitet, so resultiert ein als Blockmischpolymerisat mit verschmiertem Übergang zu bezeichnendes Copolymerisat, das einen ersten Blockteil mit überwiegend einem Monomeren, einem Mittelteil mit verschmiertem Übergang und einem zweiten Blockanteil mit überwiegend dem anderen Monomeren enthält. Bei Verwendung von polaren Lösungsmitteln und Vorgabe der Monomeren entstehen statistische Copolymerisate, dasselbe kann man durch bestimmte Zulauftechniken erhalten.

Der mittelständige Teil B des Blockcopolymerisates A-B-C liegt in einem Anteil von 50 bis 85 Gew.%, insbesondere von 60 bis 70 Gew.%, bezogen auf A-B-C, vor.

Schließlich umfaßt der Teil C des linearen Blockcopolymerisates A-B-C entweder nur Polyisopren, das zumindestens 50 % 3,4-verknüpfte Bausteine enthält oder es enthält im wesentlichen ein Copolymerisat aus Styrol einerseits und Isopren oder Butadien als konjugiertem Dien andererseits. Das Copolymerisat kann Styrol in Mengen von 40 bis 60 und Butadien oder Isopren in einem Anteil von 60 bis 40 Gew.% enthalten und soll die Monomeren in statistischer Verteilung enthalten. Die Glastemperatur des Teils C des Blockcopolymerisates weist somit Werte von -40 bis +20°C auf. Der Anteil von C, bezogen auf A-B-C, beträgt im allgemeinen 5 bis 40 Gew.%, insbesondere 10 bis 25 Gew.%.

Die linearen Blockcopolymerisate A-B-C können auf an sich bekannte Art und Weise durch aufeinanderfolgende Polymerisation der Monomeren in Lösung in Gegenwart eines Monolithium-Kohlenwasserstoffes als Initiator hergestellt werden. Als Initiator geeignete Monolithium-Kohlenwasserstoffe sind solche der allgemeinen Formel RLi, worin R einen aliphatischen, cycloaliphatischen, aromatischen oder gemischt aliphatisch-aromatischen Kohlenwasserstoffrest mit 1 bis 12 Kohlenstoffatomen darstellt und insbesondere ein aliphatischer Kohlenwasserstoffrest ist. Bevorzugt werden verwendet: n-, sek.-Butyllithium, Isobutyllithium und Vinyllithium, wovon die beiden erstgenannten besonders bevorzugt sind.

Als Lösungsmittel für die Herstellung der linearen Blockcopolymerisate A-B-C kommen inerte, aliphatische, cycloaliphatische oder aromatische Kohlenwasserstoffe, wie n-Hexan, Heptan, Isooctan; Cyclohexan, Cycloheptan; Benzol, Toluol u.a. in Betracht. Die Polymerisation kann in Gegenwart geringer Mengen polarer Lösungsmittel, wie Aminen, Alkoholaten und Äthern, insbesondere Tetrahydrofuran durchgeführt werden. Die polaren Lösungsmittel werden im allgemeinen in Mengen von 0,05 bis 10 Gew.%, vorzugsweise von 0,1 bis 2 Gew.%, bezogen auf das gesamte Lösungsmittel, angewendet. Die Polymerisation erfolgt unter den für die anionische Polymerisation mit lithiumorganischen Verbindungen üblichen Bedingungen, wie Inertgasatmosphäre unter Luft- und Feuchtigkeitsausschluß. Die Polymerisationstemperaturen liegen im allgemeinen zwischen 0 und 150°C und werden vorzugsweise im Bereich zwischen 20 und 100°C gewählt.

Zur Herstellung der linearen Blockcopolymerisate A-B-C werden zunächst die monovinyl- bzw. monovinylidenaromatischen Verbindungen mit Hilfe der Monolithium-Kohlenwasserstoffe bis zur praktisch vollständigen Umsetzung der Monomeren zu dem gewünschten endständigen, nichtelastomeren Polymerblock -A- polymerisiert. Anschließend wird zu der Lösung der resultierenden aktiven Living-Polymerisate entweder Isopren oder ein Gemisch aus Butadien und Isopren unter Zusatz eines polaren Lösungsmittels zugesetzt, so daß an die aktiven Kettenenden des vorgebildeten lebenden Blockpolymerisates Isopren oder Butadien und Isopren in statistischer Verteilung angelagert wird. Der Aufbau des mittelständigen Teils, B, der Komponente A kann jedoch auch durch die bekannten Monomerzulauftechniken zu der Lösung der aktiven Living-Polymerisate erhalten werden. Nach Beendigung der Polymerisation des mittelständigen Teiles B, wird ein Gemisch aus Styrol und Butadien oder Isopren eventuell unter erneuter Zugabe eines polaren Lösungsmittels (Randomizer) zu der Lösung gegeben, worauf die zugegebenen Monomeren in statistischer Verteilung an die Living-Polymerisate angebaut werden. Für den Fall, daß der Teil B nur aus Polyisopren und der Teil C aus 3,4-Polyisopren aufgebaut werden soll, kann die gesamte für Teil B und C berechnete Menge an Isopren auf einmal zugegeben werden, jedoch muß dann zu einem geeigneten Zeitpunkt noch der Randomizer zugegeben werden, damit die besondere Mikrostruktur des Teils C des Blockcopolymerisates erhalten werden kann. Die Polymerisation wird auf übliche Weise durch Deaktivierung des Initiators beendet und das Polymerisat gefällt und getrocknet.

Das mittlere Molekulargewicht A + B + C der erfindungsgemäß einzusetzenden kautschukartigen linearen Blockcopolymerisate (Komponente A) soll im Bereich von 30 000 bis 300 000 liegen. Der nicht-elastomere Polymerblock A aus der monovinyl- bzw. monovinylidenaromatischen Verbindung besitzt dabei in der Regel ein mittleres Molekulargewicht von 5 000 bis 50 000, vorzugsweise 15 000 bis 25 000; das elastomere (Co)polymerisat B hat in der Regel ein mittleres Molekulargewicht von 20 000 bis 200 000, vorzugsweise von 40 000 bis 100 000. Das mittlere Molekulargewicht des (Co)polymerisats C liegt im Bereich von 20 000 bis 100 000.

Bei den angegebenen Molekulargewichten handelt es sich um das viskosimetrische Mittel.

Als klebrigmachende Harze (Komponente B) kommen für die erfindungsgemäße Schmelzhaftkleber-Mischung die bekannten Stoffe dieser Art in Betracht, wie sie u.a. in den eingangs zitierten Druckschriften beschrieben sind. Hierzu gehören beispielsweise unmodifiziertes und modifiziertes Kolophonium, wobei insbesondere mehrwertige Ester von Kolophonium, wie Kolophoniumglycerinester oder Kolophoniumpentaerythritester, günstig sind. Besonders vorteilhaft sind die hydrierten Kolophoniumderivate. Weiterhin können als klebrigmachende Harze die bekannten $\alpha$- oder ß-Pinenharze mit einem Molekulargewicht im Bereich von 100 bis 2000 sowie synthetische Polyterpen-Harze angewendet werden als auch aliphatische Dien--Olefin-Kohlenwasserstoff-Harze im Molekulargewichtsbereich von 500 bis 3000. Eine weitere Gruppe von klebrigmachenden Harzen stellen die Cumaron-Inden-Harze, die Polyinden-Harze und die phenolmodifizierten Harze dar. Die Molekulargewichte dieser Harze liegen im allgemeinen im Bereich von 200 bis 1500. Ferner können auch die bekannten Harze auf Basis von Styrol oder den substituierten Styrolen mit niedrigem oder mittlerem Molekulargewicht, beispielsweise im Bereich von etwa 300 bis 6000, als Klebrigmacher verwendet werden. Beispiele

hierfür sind Polystyrol-Harze, Isobutylen/Styrol-Copolymerisate und Vinyltoluol/Styrol-Copolymerisate. In Frage kommt als Klebrigmacher auch Polyisobutylen, das ein Molekulargewicht von 1000 bis 50 000, bestimmt nach Staudinger, hat.

Die klebrigmachenden Harze werden in einer Menge von 25 bis 300 Gew.-Teilen, vorzugsweise von 50 bis 150 Gew.--Teilen, je 100 Gew.-Teilen der Komponente A eingesetzt. Die einzelnen klebrigmachenden Harze können dabei allein oder auch in Kombination miteinander verwendet werden.

Als weitere Komponente C enthält die erfindungsgemäße Schmelzhaftkleber-Mischung noch ein Kautschuk-Strecköl in Mengen von 5 bis zu 200 Gew.-Teilen je 100 Gew.-Teilen der Komponente A. Vorzugsweise werden 10 bis 100 Gew.-Teile des Strecköls je 100 Gew.-Teile A eingesetzt. Der Ausdruck Kautschuk-Strecköl umfaßt dabei sowohl die üblichen, aus Erdölfraktionen gewonnenen Strecköle als auch Olefin-Oligomere und niedermolekulare Polymere sowie pflanzliche und tierische Öle und deren Derivate. Die als Strecköle verwendbaren Erdölfraktionen sind hochsiedende Mineralöle mit kontrollierter Kohlenwasserstoff-Zusammensetzung und variierenden Viskositäten. Sie reichen von paraffinischen über naphtenische zu hocharomatischen Kohlenwasserstoffen. Vorzugsweise werden als Strecköle solche aus Erdölfraktionen gewonnene Mineralöle eingesetzt, die nur einen kleinen Anteil an aromatischen Kohlenwasserstoffen enthalten. Der Anteil der aromatischen Kohlenwasserstoffe beträgt vorzugsweise weniger als 30 Gew.-%, insbesondere weniger als 15 Gew.% des Mineralöls. Besonders günstig ist eine Zusammensetzung, bei der das Mineralöl 30 bis 50 Gew.% naphthenischer Kohlenwasserstoffe, 35 bis 65 Gew.% paraffinischer Kohlenwasserstoffe und außerdem aroma- tische Kohlenwasserstoffe enthält. Die spezifischen Gewichte der Mineralöle (bei 15°C) liegen im Bereich von etwa 0,80 bis 1,00 g/ml, vorzugsweise 0,83 bis 0,91 g/ml; die Viskosität beträgt im allgemeinen etwa von 10 bis 100 cSt bei 50°C. Der Siedebereich der Mineralöle liegt im allgemeinen oberhalb 270°C.

Der erfindungsgemäßen Schmelzhaftkleber-Mischung können ggf. noch übliche Zusatzstoffe D zugesetzt werden. Hierzu gehören insbesondere Antioxidantien, z.B. Zinkdibutyldithiocarbamat, sterisch gehinderte Phenole, 2,5--Di-tert.-amylhydrochinon oder chelatbildende Phosphite; Stabilisatoren, Pigmente, Weichmacher, Füllstoffe oder Modifiziermittel, wie z.B. Wachse, insbesondere Paraffin--Wachse. Die Zusatzstoffe werden der Schmelzhaftkleber--Mischung in üblichen Mengen einverleibt. Falls Antioxidantien zugesetzt werden, werden diese beispielsweise in Mengen von 0,1 bis 3 Gew.-%, bezogen auf die Schmelzhaftkleber-Mischung eingesetzt.

Die erfindungsgemäße Schmelzhaftkleber-Mischung wird durch Vermischen der einzelnen Komponenten hergestellt. Dies kann in üblicher Art und Weise unter Verwendung eines Lösungsmittels, das nachher wieder entfernt werden muß, oder aber vorteilhaft in Abwesenheit eines Lösungsmittels in der Schmelze erfolgen.

Die Vermischung der Komponenten in der Schmelze erfolgt vorzugsweise bei 140 bis 230°C. Es ist günstig, einen Teil des Strecköls, oder, falls die Rezeptur kein oder wenig Strecköl enthält, einen Teil der klebrigmachenden Harze ggf. zusammen mit dem Antioxidans vorzulegen und dann die Komponente A, das lineare Blockcopolymerisat, ständig hinzuzufügen. Sobald eine homogene Mischung erreicht ist, wird das restliche Öl und/oder Harz zugegeben.

Um mit möglichst kurzen Mischzeiten auszukommen, kann es günstig sein, das lineare Blockcopolymerisat vor dem Mischen in dem Strecköl vorzuquellen. Günstig ist es auch, das Blockcopolymerisat in Form möglichst kleiner Partikel zuzusetzen. Zum Vermischen der Komponenten werden übliche Anlagen, beispielsweise Kneter, Extruder oder Rührbehälter verwendet.

Die Haftkleber-Mischung der Erfindung kann in der Schmelze auf geeignete Substrate mit Hilfe üblicher Schmelzkleberauftragsaggregate, z.B. durch Walzen oder Extrudieren oder über Breitschlitzdüsen, etwa nach dem System Bolton-Emerson, aufgebracht werden. Die aufwendigen Lösungsmittelbeschichtungssysteme sind im vorliegenden Fall daher unnötig. Geeignete Substrate sind beispielsweise Kunststoff-Platten bzw. -Folien, textile Gewebe aus Kunst- oder Naturfasern, Vliesstoffe, Papier, Holz, Glas, Metalle, Gummi, Bitumbeläge, bituminierte Pappen u.a. Als Kunststoffe kommen dabei beispielsweise in Betracht: Polyolefine, wie Polyäthylen oder Polypropylen; Polyvinylchlorid, Polyäthylenglykolterephthalat oder Polystyrol. Um die Haftklebemassen auf wärmeempfindliche Folien aufzutragen, bedient man sich des sogenannten Transfer-Verfahrens, d.h. die Klebemasse wird zuerst als Film auf Silikonpapier aufgebracht, der dann nach dem Erkalten auf die Folie übertragen wird.

Die beschriebenen Schmelzhaftkleber-Mischungen eignen sich insbesondere als druckempfindliche Klebstoffe zur Herstellung selbstklebender Materialien, beispielsweise selbstklebender Folien, selbstklebender Etiketten, selbstklebender Bodenbeläge, selbstklebender Wandbeläge, medizinischer Pflaster und selbstklebender Antidröhnmaterialien.

Die Erfindung wird durch die nachfolgenden Beispiele und Vergleichsversuche erläutert. Die darin genannten Teile und Prozente beziehen sich, sofern nicht anders angegeben, auf das Gewicht. Die angegebenen Molekulargewichte werden durch Messung der Viskosität mit einem Ubbelohde-Viskosimeter bestimmt.

In den Beispielen und Vergleichsversuchen werden 40/um dicke Folien aus Polyäthylenglykolterephthalat mit einem 25/um dicken Haftkleberfilm beschichtet. Der Haftkleber kann als Schmelze oder als Lösung (beispielsweise in Toluol) auf die Polyäthylenglykolterephthalat-Folie aufgebracht werden. Wenn ein Lösungsmittel verwendet wird, ist es erforderlich, das Lösungsmittel unter vermindertem Druck abzudampfen. Man steigert dabei die Temperatur der beschichteten Folie nicht über ca. 130°C. Zur Beurteilung der Klebeeigenschaften der mit dem Haftkleber beschichteten Folie bestimmt man nach einer Trocknung bei Raumtemperatur die Oberflächenklebrigkeit mit Hilfe des Schältests. Außerdem wird die Kohäsion der Klebstoffschicht mit Hilfe des Schertests ermittelt.

Beim Schältest werden 2 cm breite Prüfstreifen auf eine verchromte Platte aufgeklebt und parallel zur Klebschicht, d.h. unter einem Winkel von 180°C abgeschält und die dafür notwendige Kraft gemessen; Dimension [N/2 cm]. Die Abzugsgeschwindigkeit beträgt 300 mm/min. Die Messung wird 24 Stunden nach der Verklebung durchgeführt.

Der Schertest wird nach der in der DT-OS 21 34 688 beschriebenen Methode durchgeführt. Die Prüfstreifen werden dabei auf ein hochglanzverchromtes Blech mit einer Fläche von 20 x 25 mm geklebt. Das beschichtete Blech wird senkrecht eingespannt. Man belastet das Ende des Klebestreifens mit 100 g und ermittelt die Zeit bis sich die Ver-

klebung unter der konstanten Zugspannung löst. Die Messung wird bei 23°C und 50°C ausgeführt.

Herstellung von A-B-C-Blockcopolymerisaten

1. Herstellung von A1

75 g (0,72 Mol) Styrol werden in 1800 g Cyclohexan mit 4 mMol sec-Butyllithium versetzt und bei 60°C binnen einer Stunde polymerisiert. 395 g (5,81 Mol) Isopren werden bei 60 bis 80°C binnen 2 Stunden anpolymerisiert. Nach Zusatz von 1,6 g (0,022 Mol) THF als Randomizer wird eine Mischung aus 15,0 g (0,14 Mol) Styrol und 15,0 g (0,22 Mol) Isopren binnen 3 Stunden bei Temperaturen zwischen 60 und 90°C zugegeben. Das Living-Polymerisat A-B-C wird durch Deaktivierung mittels protonaktiver Substanzen zerstört. Das Polymere wird durch Eingießen der Lösung in Alkohol gefällt und anschließend getrocknet. Das erhaltene lineare Blockcopolymerisat A-B-C wies ein Gesamtmolekulargewicht $\bar{M}_v$ von 127 000 bei einem mittleren Molekulargewicht $\bar{M}_v$ des Blockes A von 19 000 auf.

2. Herstellung von Blockcopolymeren A2 bis A6

In der vorstehend beschriebenen Weise wurden die Blockcopolymeren A2 bis A6 in 3 Stufen hergestellt. Die in den einzelnen Stufen verwendeten Monomerensorten, deren Menge bzw. Verhältnis, sowie das mittlere Molekulargewicht $\bar{M}_v$ des gebildeten endständigen Polymerblockes A und das der Endprodukte sind in der Tabelle 1 angegeben. Es bedeuten in der Tabelle S = Styrol, I = Isopren, Bu = Butadien. Die erhaltenen linearen Blockcopolymerisate A-B-C besitzen folgende Sequenzfolgen.

| Produkt | A | B | C |
|---|---|---|---|
| A2 bis A4 | S | I | S/I |
| A5 | S | I | S/Bu |
| A6 | S | Bu/I | S/I |

3. Herstellung von A7

100 g (0,96 Mol) Styrol werden in 4000 g Toluol mit 3 mMol sec-Butyllithium versetzt und binnen 1 Stunde bei 60°C polymerisiert. Anschließend werden 600 g (8,82 Mol) Isopren binnen 2,5 Stunden bei 60°C anpolymerisiert. Nach Zugabe von 456 g (6,33 Mol) THF als Randomizer wird nochmals Isopren zugegeben (300 g entsprechend 4,41 Mol) und 2 Stunden bei 600°C polymerisiert. In der letzten Verfahrensstufe entsteht ein Isopren mit Blockstruktur, bei dem ca. 60 Gew.% des Isoprens in 3,4-Verknüpfung vorliegt. Das Polymere wird nach Deaktivierung durch Eingießen der Lösung in Alkohol gefällt und getrocknet. Der endständige Polystyrolblock wies ein mittleres Molekulargewicht $\overline{M}v$ von 33 000, auf; das Gesamtmolekulargewicht des Blockcopolymerisats A-B-C betrug 330 000.

Beispiele 1 - 6

Herstellung von Schmelzhaftkleber-Mischungen Jeweils 100 Teile der linearen Blockcopolymerisate A1 bis A6 wurden mit 50 Teilen eines naphthenbasischen Strecköls der Dichte 0,902 g/ml (15°C), eines Aromatengehaltes von 29 %, einer Viskosität von 548 cSt bei 20°C und 67,8 cSt bei 50°C, (Catenex N 945 der Firma Shell), 50 Teilen eines Glyzerinesters von hydriertem Kolophonium (Foral 85), 50 Teilen eines synthetischen Polyterpenharzes (Wing Tack 95) und 5 Teilen eines Antioxidans (Butylzimate) in einem Kneter bei Mischtemperaturen von ca. 200°C homogenisiert. Im einzelnen wurde dabei so vorgegangen, daß die Harze und das Strecköl vorgelegt wurden und dann das mit dem Strecköl angequollene Blockcopolymerisat langsam zugegeben wurde. Die Prüfung der erhaltenen Schmelzklebermischungen erfolgte in allen Beispielen und in den Vergleichsversuchen, wie oben beschrieben. Die Prüfungsergebnisse sind in der Tabelle 2 zusammen mit den Werten aufgeführt, die für eine Schmelzhaftklebermischung erhalten wurde, wenn sie ein nach der Lehre von (1) anzuwendendes Dreiblockcopolymerisat Polystyrol/Isopren/Polystyrol enthielt.

Beispiel 7

100 Teile des Copolymerisates A1 wurden mit 50 Teilen des beschriebenen naphthenbasischen Strecköls (Catenex N 945 der Firma Shell), 150 Teilen eines Glyzerinesters von hydriertem Kolophonium (Foral 85) und 5 Teilen eines Antioxidans (Butylzimate) wie in Beispiel 1 beschrieben, homogenisiert.

Beispiel 8

Aus 100 Teilen des linearen Blockcopolymerisates A1, 150 Teilen eines Glyzerinesters von hydriertem Kolophonium (Foral 85) und 5 Teilen eines Antioxidans (Butylzimate) wurde eine Schmelzhaftklebermischung, wie in Beispielen 1 bis 6 beschrieben, hergestellt.

Vergleichsversuche

Für die Vergleichsversuche 1 und 2 wurde jeweils ein Styrol-Isopren-Styrol-Dreiblockcopolymerisat mit dem viskosimetisch ermittelten Gesamtmolekulargewicht $\overline{M}v$ von 119 000, das aus 16 Teilen Styrol und 84 Teilen Isopren aufgebaut war, verwendet. Im Vergleichsversuch 1 wurde aus 100 Teilen dieses Dreiblockcopolymerisats und unter Anwendung der in den Beispielen 1 bis 6 gegebenen Rezeptur eine Schmelzhaftklebermischung hergestellt. Im Vergleichsversuch 2 wurde aus dem genannten Dreiblockcopolymerisat und unter Verwendung der in Beispiel 8 gegebenen Rezeptur eine Schmelzhaftklebermischung erzeugt. An den erfindungsgemäßen Mischungen und an den in den Vergleichsversuchen 1 und 2 beschriebenen Schmelzhaftklebermischungen wurden die Schälfestigkeiten und die Scherfestigkeiten, letztere bei 23 und 50°C, gemessen. Die erhaltenen Meßwerte sind in der Tabelle aufgeführt.

Tabelle 1

| Art des Endproduktes | $A_2$ | $A_3$ | $A_4$ | $A_5$ | $A_6$ |
|---|---|---|---|---|---|
| 1. Stufe, Teil A | | | | | |
| von A-B-C | 15 Tl. S | 15 Tl. S | 25 Tl. S | 15 Tl. S | 15 Tl. S |
| mittleres Molgewicht $\bar{M}v$ in 1000 | 42 | 19 | 32 | 18 | 18 |
| 2. Stufe, Teil B | 79 Tl I | 65 Tl. I | 69 Tl. I | 73 Tl. I | 73 Tl. Bu/1 |
| von A-B-C | | | | | 1 : 9 |
| 3. Stufe, Teil C | 6 Tl. S/I | 20 Tl. S/I | 6 Tl. S/I | 12 Tl.S/Bu | 12 Tl. S/I |
| | 1 : 1 | 1 : 1 | 1 : 1 | 1 : 1 | |
| von A-B-C | im Zulauf | im Zulauf | im Zulauf | im Zulauf | |
| mittleres Gesamtmolekulargewicht $\bar{M}v$ in 1000 | 280 | 127 | 128 | 120 | 120 |

0027606

Tabelle 2

|  | Schälfestigkeit (N/2 cm) | Scherfestigkeit in Std. | |
|---|---|---|---|
|  |  | bei 23°C | bei 50°C |
| Beispiel 1 | 15,2 K | 9 K | 0,5 K |
| 2 | 20,2 K | 20 K | 5,0 K |
| 3 | 13,5 A | >24 | 2 K |
| 4 | 15,0 A | >24 | 1 K |
| 5 | 12,5 A | 22 K | 1,5 K |
| 6 | 14,3 A | >24 | 8 |
| 7 | 20,5 K | 7 K | 0,3 K |
| 8 | 14,0 A | >24 | 4 K |
| Vergleichs-versuch 1 | 11,0 | 4 K | 0,2 K |
| Vergleichs-versuch 2 | 13,5 A | 6 K | 0,25 K |

A = Adhäsionsbruch

K = Kohäsionsbruch

## Patentanspruch

Schmelzhaftkleber
enthaltend i.w. eine Mischung aus

A)  100 Gew.-Teilen mindestens eines nicht hydrierten,
    linearen Blockcopolymerisats der Formel
    A-B-C,
    das aufgebaut ist aus:

    a1)  einem endständigen, nicht-elastomeren Polymerblock A, aus monovinylaromatischen Monomeren,
         der ein mittleres Molekulargewicht
         (Viskositätsmittel) von 5000 bis 50 000
         aufweist und in einem Anteil von 5 bis 25 Gew.%,
         bezogen auf A-B-C, vorliegt,

    a2)  einem Elastomeren (Co-)polymerisat B aus Isopren oder Butadien und Isopren

    a3)  einem Polymerisat C;

B)  25 bis 300 Gew.-Teilen eines klebrigmachenden Harzes,

C)  5 bis 200 Gew.-Teilen eines Kautschukstrecköles
    und ggf.

D)  üblichen Zusatzstoffen in wirksamen Mengen,
    dadurch gekennzeichnet, daß das elastomere (Co-)polymerisat a2) in einem Anteil von 50 bis 85 Gew.%, bezogen auf A-B-C, vorliegt und einen Butadienanteil
    von bis zu 70 Gew.% aufweist, ferner gekennzeichnet
    dadurch, daß das Polymerisat a3) in einem Anteil von
    5 bis 40 Gew.%, bezogen auf A-B-C, vorliegt und entweder nur aus Isopren mit mehr als 50 % 3,4-verknüpften Bausteinen besteht oder ein Copolymerisat

**0027606**

darstellt, das Styrol und Butadien oder Styrol und Isopren im Verhältnis Styrol/konjugiertes Dien von 40/60 bis 60/40 aufweist und die Monomeren in statistischer Verteilung enthält.

## Europäisches Patentamt

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| D | DE - A - 1 594 254 (SHELL)<br>* Ansprüche *<br><br>-- | 1 |
| D | DE - A - 2 011 036 (KRAWCZYK)<br>* Insgesamt *<br><br>-- | |
| | DE - A - 2 246 036 (SHELL)<br>* Ansprüche *<br><br>-- | 1 |
| | DE - A - 2 550 546 (BASF)<br>* Ansprüche *<br><br>-- | 1 |
| | US - A - 4 017 654 (T.A. EVANS et al.)<br>* Ansprüche *<br><br>-- | 1 |
| | PATENTS ABSTRACTS OF JAPAN, Band 4, Nr. 135, 20. September 1980, Seite 141C25<br>& JP - A - 55 86855 (DENKI K.K.)<br>* Insgesamt *<br><br>---- | 1 |

**KLASSIFIKATION DER ANMELDUNG (Int. Cl.³)**

C 09 J   3/14
C 08 L 53/02

**RECHERCHIERTE SACHGEBIETE (Int Cl.³)**

C 09 J   3/14
C 08 L 53/02
C 09 J   7/02
           7/04

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 30-01-1981 | FOUQUIER |

EPA form 1503.1   06.78